# EUROPEAN PATENT SPECIFICATION

(11) **EP 3 219 768 B1**
(45) Date of publication and mention of the grant of the patent: **21.08.2019**
(21) Application number: 15854626.7
(22) Date of filing: 29.10.2015
(51) Int. Cl.: C09D 127/12, B05D 7/24, C09D 5/03

(54) **POWDER COATING COMPOSITION, POWDER COATING, AND COATED ARTICLE**
PULVERBESCHICHTUNGSZUSAMMENSETZUNG, PULVERBESCHICHTUNG UND BESCHICHTETER ARTIKEL
COMPOSITION POUR REVÊTEMENT EN POUDRE, REVÊTEMENT EN POUDRE, ET ARTICLE REVÊTU DE POUDRE

(30) Priority: 31.10.2014 JP 2014223705
(43) Date of publication of application: 20.09.2017
(73) Proprietor: AGC Inc., Tokyo 100-8405 (JP)
(72) Inventor: SAITO, Shun, Tokyo 100-8405 (JP); AIKAWA, Masataka, Tokyo 100-8405 (JP)
(74) Representative: Müller-Boré & Partner Patentanwälte PartG mbB
(86) International application number: PCT/JP2015/080605
(87) International publication number: WO 2016/068255

(56) References cited:
- EP-A1- 2 256 169
- WO-A1-01/42372
- WO-A1-02/100956
- WO-A1-2007/132736
- WO-A1-2014/002964
- JP-A- 2004 210 875
- JP-A- 2013 001 840

## Description

### TECHNICAL FIELD

The present invention relates to a composition for powder coating material, and a powder coating material and coated article using the same.

### BACKGROUND ART

In recent years, global scale environmental destruction such as global warming, ozone layer depletion, acid rain, etc. has become an international problem. There is an urgent need for global environment pollution measures, and at present, from the viewpoint of environmental protection, various emission regulations have been enforced in each country. Among them, discharge of organic solvents (VOC) to the atmosphere is a serious problem, and under reinforcement of VOC emission regulations, removal of organic solvents (de VOC) is being advanced in various fields.

Heretofore, VOC has been used for coating materials, but in view of the above circumstances as the background, a powder coating material has now become to be widely used, which contains no VOC, requires no exhaust treatment or no waste water treatment, further can be recovered and reused, and presents an extremely low environmental load.

At present, as raw materials for powder coating materials, acrylic resins, polyester resins and epoxy resins are mainly used. However, coating films formed by powder coating materials using these resins as the raw materials, are inferior in weather resistance. Therefore, as a coating material capable of forming a coating film excellent in weather resistance, a powder coating material containing a fluororesin has been studied.

Further, in recent years, the application range of the powder coating material containing a fluororesin has been expanded to exterior materials of buildings, such as sashes (window frames, etc.), curtain walls, etc., and therefore, a powder coating material is desired which is capable of forming a coating film more excellent in appearance and excellent also in properties such as flexibility, impact resistance, etc.

For example, Patent Documents 1 and 2 disclose compositions for powder coating materials using a fluoro-olefin type fluorocopolymer having fluoroolefin units, specific vinyl ether units and vinyl ester units, and it is disclosed that by these compositions for powder coating materials, it is possible to form a coating film having excellent appearance and flexibility.

### PRIOR ART DOCUMENTS

### PATENT DOCUMENTS

Patent Document 1: WO2007/132736
Patent Document 2: WO2002/100956

EP 2 256 169 A1 describes a flake pigment including a coat having an outermost layer made of a copolymer including a first bond unit originating from a fluoric polymerizable monomer having fluorine and a second bond unit originating from a polymerizable monomer having phosphate group, onto which fine particles providing triboelectrification characteristics are fixed with the outermost layer being interposed.

### DISCLOSURE OF INVENTION

### TECHNICAL PROBLEM

However, by a study made by the present inventors, the coating films formed by the compositions for powder coating materials described in Patent Documents 1 and 2 were found to be still insufficient in appearance, and especially when the coating area increases, poor appearance such as seeding, cissing, etc. becomes noticeable. Therefore, the application of these compositions for powder coating materials has been limited to a member with a small coating area, such as a sash, where the defective appearance is not noticeable. Further, smoothness of the coating film was also not sufficient.

An object of the present invention is to provide a composition for powder coating material capable of forming a coating film having no poor appearance such as seeding, cissing, etc. and being excellent also in surface smoothness, a powder coating material using such a composition for powder coating material, and a coated article having a coating film formed by the powder coating material.

### SOLUTION TO PROBLEM

The present invention has the following constructions [1] to [13].
[1] A composition for powder coating material characterized by comprising a fluoropolymer having units derived from a fluoroolefin, of which the melt viscosity at 190°C measured by a rotary rheometer at a temperature-raising rate of 10°C/min is within a range of from 0.1 to 25 Pa·s, and fine particles which are composed of at least one member selected from silica, alumina, titania and zinc oxide, and of which the specific surface area is from10 to 500 m²/g and the average primary particle size is within a range of from 0.1 to 100 nm, wherein said fine particles are contained in an amount of from 0.01 to 10 parts by mass, to 100 parts by mass of said fluoropolymer, wherein the fluoropolymer is
   (A1) a hydroxy group-containing fluoropolymer, wherein the proportion of the units derived from a monomer having a hydroxy group is from 0.5 to 25 mol% in all units (100 mol%) in the hydroxy group-containing fluoropolymer, or
   (A2) a carboxy group-containing fluoropolymer, wherein the proportion of the monomer units having a carboxy group is from 0.5 to 20 mol% in all units (100 mol%) in the carboxy group-containing fluoropolymer.
[2] The composition for powder coating material according to [1], wherein the fine particles are surface-treated with an organosilicon compound.
[3] The composition for powder coating material according to [1] or [2], wherein the average primary particle size of the fine particles is within a range of from 0.5 to 90 nm.
[4] The composition for powder coating material according to any one of [1] to [3], which further contains a resin other than the fluoropolymer.
[5] The composition for powder coating material according to [4], wherein the resin other than the fluoropolymer is a resin which is composed of at least one member selected from an acrylic resin, a polyester resin, a polyurethane resin, an epoxy resin and a silicone resin, and of which the melt viscosity at 190°C measured by a rotary rheometer at a temperature-raising rate of 10°C/min is within a range of from 0.1 to 10 Pa·s.
[6] The composition for powder coating material according to [4] or [5], wherein the resin other than the fluoropolymer is a polyester resin having hydroxy groups or carboxy groups.
[7] The composition for powder coating material according to any one of [1] to [6], which further contains a curing agent, a curing catalyst, an ultraviolet absorber or a pigment.
[8] The composition for powder coating material according to any one of [1] to [3], wherein the composition further comprises a pigment, and the content of the pigment is from 20 to 200 parts by mass per 100 parts by mass of the fluoropolymer.
[9] The composition for powder coating material according to any one of [4] to [6], wherein the composition further comprises a pigment, and the content of the pigment is from 20 to 200 parts by mass per 100 parts by mass of the total of the fluoropolymer and the resin other than the fluoropolymer.
[10] A powder coating material comprising a powder composed of the composition for powder coating material as defined in any one of [1] to [9].
[11] A coated article having a coating film formed of the powder coating material as defined in [10], on the surface of a substrate.
[12] The coated article according to [11], wherein the 60° gloss of the coating film is from 10 to 90°.
[13] The coated article according to [11] or [12], wherein the material of the substrate is aluminum.

### ADVANTAGEOUS EFFECTS OF INVENTION

According to the present invention, it is possible to provide a composition for powder coating material capable of forming a coating film which has no poor appearance such as seeding, cissing, etc. and which is excellent also in surface smoothness, a powder coating material using such a composition for powder coating material, and a coated article having a coating film formed by the powder coating material.

### DESCRIPTION OF EMBODIMENTS

The following definitions of terms apply throughout the present specification including claims.

A "fluoropolymer" means a polymer having fluorine atoms in the molecule.

A "(meth)acrylate" is a general term for an acrylate and a methacrylate, and "(meth)acryl" is a general term for "acryl" and "methacryl".

A "unit" is present in a polymer to constitute the polymer, and it means a moiety derived from a monomer. A unit to be formed by addition polymerization of a monomer having a carbon-carbon unsaturated double bond, as derived from the monomer, is a bivalent unit formed by cleavage of the unsaturated double bond. Further, one having a structure of a certain unit chemically changed after forming a polymer, is also referred to as a unit.

In the following, optionally, a unit derived from each monomer may be referred to by a name having "unit" attached to the monomer name.

A "specific surface area" means a specific surface area obtained by the BET method. Further, an "average primary particle size" is a median diameter measured by a particle size distribution meter in accordance with the laser diffraction method.

### [Composition for powder coating material]

The composition for powder coating material of the present invention comprises a fluoropolymer having fluoroolefin units, of which the melt viscosity at 190°C measured by a rotary rheometer at a temperature-raising rate of 10°C/min. is within a range of from 0.1 to 25 Pa·s, and fine particles which are composed of at least one member selected from silica, alumina, titania and zinc oxide, and of which the specific surface area is from 10 to 500 m²/g and the average primary particle size is within a range of from 0.1 to 100 nm, wherein the fluoropolymer is
(A1) a hydroxy group-containing fluoropolymer, wherein the proportion of the units derived from a monomer having a hydroxy group is from 0.5 to 25 mol% in all units (100 mol%) in the hydroxy group-containing fluoropolymer, or
(A2) a carboxy group-containing fluoropolymer, wherein the proportion of the monomer units having a carboxy group is from 0.5 to 20 mol% in all units (100 mol%) in the carboxy group-containing fluoropolymer.

Hereinafter, a "fluoropolymer having fluoroolefin units, of which the melt viscosity at 190°C measured by a rotary rheometer at a temperature-raising rate of 10°C/min. is within a range of from 0.1 to 25 Pa·s" will be referred to as a "fluoropolymer (A)", and "fine particles which are composed of at least one member selected from silica, alumina, titania and zinc oxide, and of which the specific surface area is from 10 to 500 m²/g and the average primary particle size is within a range of from 0.1 to 100 nm" will be referred to as "fine particles (B)".

### (Fluoropolymer (A))

Of the fluoropolymer (A) to be used in the present invention, the melt viscosity at 190°C measured by a rotary rheometer at a temperature-raising rate of 10°C/min. is within a range of from 0.1 to 25 Pa·s, preferably within a range of from 0.3 to 23 Pa·s, more preferably within a range of from 0.5 to 20 Pa·s. When the melt viscosity of the fluoropolymer (A) is within the above range, specifically when fine particles (B) as described later are used in combination in a specific ratio, it is possible to obtain a composition for powder coating material capable of forming a coating film which has no poor appearance such as seeding, cissing, etc. and which is excellent also in surface smoothness. When the melt viscosity of the fluoropolymer (A) is at most the upper limit value in the above range, it is possible to form a coating film having excellent surface smoothness by combined use with fine particles (B). Further, when the melt viscosity of the fluoropolymer (A) is at least the lower limit value in the above range, even when a substrate having a complicated shape is coated as suspended, it is possible to make the thickness to be constant.

In this specification, the conditions used for measuring the melt viscosity by a rotary rheometer are as follows.

Temperature: The temperature was raised from 130°C to 200°C, and the melt viscosity at 190°C was measured.

Temperature-raising rate: 10°C/min.
Frequency: 1 Hz

Further, as the fluoropolymer (A), from the viewpoint of excellent stain resistance, water resistance, acid resistance and alkali resistance, there is used a fluoropolymer (A) containing a hydroxy group (hereinafter referred to as a "hydroxy group-containing fluoropolymer (A1)") or a fluoropolymer (A) containing a carboxy group (hereinafter referred to as a "carboxy group-containing fluoropolymer (A2)"). A hydroxy group-containing fluoropolymer (A1) or a carboxy group-containing fluoropolymer (A2) is, since it contains a hydroxy group or a carboxy group, excellent in a curing speed in a case where the composition for powder coating material contains an isocyanate-type curing agent (especially a blocked isocyanate-type curing agent) as a curing agent as described later. Further, it is preferred, for example, in that titanium dioxide pigment or the like is readily dispersed therein, whereby it is possible to obtain a coating film with high gloss.

### <Hydroxy group-containing fluoropolymer (A1)>

As the hydroxy group-containing fluoropolymer (A1), preferred is a hydroxy group-containing fluoropolymer having fluoroolefin units, units derived from a monomer having a hydroxy group (hereinafter referred to as a "monomer (m1)") copolymerizable with the fluoroolefin, and, as the case requires, units derived from a monomer (hereinafter referred to as a "monomer (m2)") other than the monomer (m1).

The hydroxy group-containing fluoropolymer (A1) may be a hydroxy group-containing fluoropolymer obtained by introducing a hydroxy group by conversion of a reactive group of a polymer. As such a hydroxy group-containing fluoropolymer, preferred is a fluoropolymer obtained by reacting a fluoropolymer having fluoroolefin units, units derived from a monomer having a reactive functional group other than a hydroxy group, and, as the case requires, units derived from the above-mentioned monomer (m2), with a compound having a hydroxy group and a reactive functional group reactive with the above reactive functional group.

The monomer (such as monomer (m1), monomer (m2), etc.) to be copolymerized with a fluoroolefin, may be a monomer having a fluorine atom other than a fluoroolefin, but a monomer having no fluorine atom is preferred.

The monomer (m1) is a monomer having a hydroxy group.

The monomer having a hydroxy group may, for example, be allyl alcohol, a hydroxyalkyl vinyl ether (2-hydroxyethyl vinyl ether, 4-hydroxybutyl vinyl ether, cyclohexanediol monovinyl ether, etc.), a hydroxyalkyl allyl ether (ethylene glycol monoallyl ether, etc.), a vinyl hydroxyalkanoate (vinyl hydroxypropionate, etc.), a hydroxyalkyl (meth)acrylate (hydroxyethyl (meth)acrylate, etc.), etc.

As the monomer (m1), one type may be used alone, or two or more types may be used in combination.

The monomer (m2) is preferably a vinyl monomer, i.e. a compound having a carbon-carbon double bond. The vinyl monomer is excellent in alternating copolymerizability with a fluoroolefin, and the polymerization yield can be made high. Further, even when it remains unreacted, it presents a less impact on the coating film, and can be easily removed in the production process.

The vinyl monomer may, for example, be a vinyl ether, an allyl ether, a vinyl carboxylate, an allyl carboxylate, an olefin, etc.

The vinyl ether may, for example, be a cycloalkyl vinyl ether (cyclohexyl vinyl ether (hereinafter referred to also as "CHVE"), etc.), or an alkyl vinyl ether (nonyl vinyl ether, 2-ethylhexyl vinyl ether, hexyl vinyl ether, ethyl vinyl ether, n-butyl vinyl ether, tert-butyl vinyl ether, etc.).

The allyl ether may, for example, be an alkyl allyl ether (ethyl allyl ether, hexyl allyl ether, etc.).

The vinyl carboxylate may, for example, be a vinyl ester of a carboxylic acid (acetic acid, butyric acid, pivalic acid, benzoic acid, propionic acid, etc.). Further, as a vinyl ester of a carboxylic acid having a branched alkyl group, commercially available VeoVa-9 or VeoVa-10 (each manufactured by Shell Chemical Co., Ltd., trade name) may be used.

The allyl carboxylate may, for example, be an allyl ester of a carboxylic acid (acetic acid, butyric acid, pivalic acid, benzoic acid, propionic acid, etc.).

The olefin may, for example, be ethylene, propylene, isobutylene, etc.

As the monomer (m2), from such a viewpoint that the glass transition temperature of the hydroxy group-containing fluoropolymer (A1) can be designed to be at least 30°C, and it is possible to suppress blocking of the coating film, a cycloalkyl vinyl ether is preferred, and CHVE is particularly preferred.

As the monomer (m2), from the viewpoint of excellent flexibility of the coating film, an alkyl vinyl ether or a vinyl alkyl carboxylate, having a linear or branched alkyl group having at least three carbon atoms, is preferred.

As the monomer (m2), one type may be used alone, or two or more types may be used in combination.

As a combination of monomers to constitute the hydroxy group-containing fluoropolymer (A1), from the viewpoint of excellent weather resistance, adhesion, flexibility, blocking resistance, etc., the following combination (1) is preferred, and the combination (2) or (3) is particularly preferred.

### Combination (1)

Fluoroolefin: tetrafluoroethylene (hereinafter referred to also as "TFE") or chlorotrifluoroethylene (hereinafter referred to also as "CTFE"),
Monomer (m1): a hydroxyalkyl vinyl ether,
Monomer (m2): at least one member selected from a cycloalkyl vinyl ether, an alkyl vinyl ether and a vinyl alkyl carboxylate.

### Combination (2)

Fluoroolefin: CTFE,
Monomer (m1): a hydroxyalkyl vinyl ether,
Monomer (m2): CHVE and ethyl vinyl ether.

### Combination (3)

Fluoroolefin: CTFE,
Monomer (m1): a hydroxyalkyl vinyl ether,
Monomer (m2): tert-butyl vinyl ether and vinyl pivalate.

Further, as in the combination (2), in a case where the hydroxy group-containing fluoropolymer (A1) is a copolymer which has fluoroolefin units and vinyl ether units, and which has a high alternating copolymerizability of a fluoroolefin and a vinyl ether, by adjusting the number average molecular weight as described later, it is possible to readily obtain a hydroxy group-containing fluoropolymer (A1), of which the above-mentioned melt viscosity by a rotary rheometer will be within the above range.

As in the combination (3), in a case where the hydroxy group-containing fluoropolymer (A1) is a copolymer which has fluoroolefin units, vinyl ether units and vinyl ester units, and which has a high alternating copolymerizability of a fluoroolefin and (vinyl ether/vinyl ester), by using a tert-butyl vinyl ether as the vinyl ether, it is possible to readily obtain a hydroxy group-containing fluoropolymer (A1), of which the above-mentioned melt viscosity by a rotary rheometer will be within the above range.

The proportion of the fluoroolefin units is preferably from 30 to 70 mol%, particularly preferably from 40 to 60 mol%, in all units (100 mol%) in the hydroxy group-containing fluoropolymer (A1).

When the fluoroolefin units are at least the above lower limit value, the coating film will be excellent in weather resistance. When the fluoroolefin units are at most the above upper limit value, the antifouling property, water resistance, acid resistance and alkali resistance of the coating film, will be more excellent.

Further, when the proportion of the fluoroolefin units is within the above range, it is possible to readily obtain a fluoropolymer (A), of which the above-mentioned melt viscosity by a rotary rheometer will be within the above range.

The proportion of monomer (m1) units is preferably from 0.5 to 25 mol%, particularly preferably from 1 to 22 mol%, in all units (100 mol%) in the hydroxy group-containing fluoropolymer (A1). When the proportion of monomer (m1) units is at least the above lower limit value, the antifouling property, water resistance, acid resistance and alkali resistance of the coating film will be more excellent. When the proportion of the monomer (m1) units is at most the above upper limit value, the scratch resistance of the coating film will be excellent.

Further, when the proportion of monomer (m1) units is within the above range, it is possible to readily obtain a fluoropolymer (A), of which the melt viscosity by a rotary rheometer will be within the above range.

The proportion of monomer (m2) units is preferably from 20 to 60 mol%, particularly preferably from 30 to 50 mol%, in all units (100 mol%) in the hydroxy group-containing fluoropolymer (A1). When the proportion of monomer (m2) units is at least the above lower limit value, the glass transition temperature of the hydroxy group-containing fluoropolymer (A1) will be proper, so that it will be easy to produce a powder coating material. When the proportion of monomer (m2) units is at most the above upper limit value, blocking of the coating film will be suppressed, and the flexibility will be excellent.

Further, when the proportion of monomer (m2) units is within the above range, it is possible to readily obtain a fluoropolymer (A), of which the above-mentioned melt viscosity by a rotary rheometer will be within the above range.

The number-average molecular weight of the hydroxy group-containing fluoropolymer (A1) is preferably from 3,000 to 50,000, more preferably from 5,000 to 30,000. When the number-average molecular weight of the hydroxy group-containing fluoropolymer (A1) is at least the above lower limit value, the coating film will be excellent in water resistance and salt water resistance. When the number-average molecular weight of the hydroxy group-containing fluoropolymer (A1) is at most the above upper limit value, the coating film will be more excellent in surface smoothness.

As in the case of the above combination (2), if the hydroxy group-containing fluoropolymer (A1) is a copolymer which has a high alternating copolymerizabiilty of a fluoroolefin and a vinyl ether, especially when the number average molecular weight is at most 9,500, the above-mentioned melt viscosity by a rotary rheometer tends to be within the above-mentioned range. From the viewpoint of the melt viscosity, the number average molecular weight of the hydroxy group-containing fluoropolymer (A1) is more preferably at most 8,500, particularly preferably at most 7,500. The number-average molecular weight of the hydroxy group-containing fluoropolymer (A1) is preferably at least 4,500, more preferably at least 5,500, particularly preferably at least 6,500, in that at the time of protecting the coating film by a protective film or protective tape, a trace is less likely to remain. The number-average molecular weight of the hydroxy group-containing fluoropolymer (A1), can be controlled by selection of a solvent to be used in the polymerization, the amount of the initiator, the addition program of the initiator, the ratio of the solvent amount and the monomer, etc.

In the present specification, the number-average molecular weight and the weight-average molecular weight are values obtained by a gel permeation chromatography (GPC) method, as calculated as polystyrene.

The hydroxy value of the hydroxy group-containing fluoropolymer (A1) is preferably from 5 to 100 mgKOH/g, more preferably from 10 to 80 mgKOH/g. When the hydroxy value of the hydroxy group-containing fluoropolymer (A1) is at least the above lower limit value, the antifouling property, water resistance, acid resistance and alkali resistance of the coating film will be more excellent. When the hydroxy value of the hydroxy group-containing fluoropolymer (A1) is at most the above upper limit value, the coating film will be excellent in crack resistance under temperature cycles of a high temperature of at least 100°C and a low temperature of at most 10°C. The measurement of the hydroxy value is carried out in accordance with JIS K1557-1: 2007 (ISO 14900: 2001), or, JIS K0070: 1992.

The glass transition temperature of the hydroxy group-containing fluoropolymer (A1) is preferably from 30 to 150°C, more preferably from 30 to 120°C, particularly preferably from 33 to 100°C. When the glass transition temperature of the hydroxy group-containing fluoropolymer (A1) is at least the above lower limit value, it will be easy to produce a powder coating material. When the glass transition temperature of the hydroxy group-containing fluoropolymer (A1) is at most the above upper limit value, the surface smoothness of the coating film tends to be better.

In the present specification, the glass transition temperature is a midpoint glass transition temperature measured by a differential scanning calorimetry (DSC) method.

### <Carboxy group-containing fluoropolymer (A2)>

A carboxy group-containing fluoropolymer (A2) is, for example, obtained by the following methods.
a. A method wherein a hydroxy group of a hydroxy group-containing fluoropolymer (A1) and an acid anhydride are reacted in an organic solvent, to form an ester bond and a carboxy group.
b. A method wherein a hydroxy group-containing fluoropolymer (A1) and an acid anhydride are melt-kneaded, so that a hydroxy group of the hydroxy group-containing fluoropolymer (A1) and an acid anhydride are reacted to form an ester bond and a carboxy group.

The carboxy group in the carboxy group-containing fluoropolymer (A2) obtained by these processes is derived from the acid anhydride. The carboxy group-containing fluoropolymer (A2) may have a hydroxy group derived from the hydroxy group-containing fluoropolymer (A1) of the raw material.

In a case where unreacted raw materials (a hydroxy group-containing fluoropolymer (A1) and an acid anhydride) are contained in a composition for powder coating material, such unreacted raw materials will be treated as a carboxy group-containing fluoropolymer (A2).

As the acid anhydride, a dibasic acid anhydride may be mentioned.

The dibasic acid anhydride may, for example, be succinic anhydride, glutaric anhydride, itaconic anhydride, anhydrous 1,2-cyclohexanedicarboxylic acid (hexahydrophthalic anhydride), anhydrous cis-4-cyclohexene-1,2-dicarboxylic acid, phthalic anhydride, 4-methylhexahydrophthalic anhydride, 1,8-naphthalic anhydride, maleic anhydride, etc.

The glass transition temperature of the carboxy group-containing fluoropolymer (A2) is preferably from 30 to 150°C, more preferably from 35 to 120°C, particularly preferably from 35 to 100°C. When the glass transition temperature of the carboxy group-containing fluoropolymer (A2) is at least the above lower limit value, it will be easy to produce a powder coating material. When the glass transition temperature of the carboxy group-containing fluoropolymer (A2) is at most the above upper limit value, the surface smoothness of the coating film will be excellent.

As the carboxy group-containing fluoropolymer (A2), also preferred is one obtained by copolymerizing a fluoroolefin, a monomer having a carboxy group (hereinafter referred to also as a "monomer (m3)") copolymerizable with the fluoroolefin and a monomer (hereinafter referred to also as a "monomer (m4)") other than the fluoroolefin and the monomer (m3) having a carboxy group. The monomer (m3) and the monomer (m4) may be monomers having fluorine atoms other than fluoroolefins, but they are preferably monomers having no fluorine atom. Further, a part of the monomer (m4) may be a monomer having a hydroxy group.

The monomer (m3) includes monomers such as (meth)acrylic acid, crotonic acid, isocrotonic acid, 10-undecylenic (undecene) acid, 9-octadecenoic acid (oleic acid), fumaric acid, maleic acid, etc. Among them, 10-undecylenic acid is preferred from the viewpoint of excellent copolymerizability with a fluoroolefin. As the monomer (m3), one type may be used alone, or two or more types may be used in combination.

As the monomer (m4), preferred is a vinyl monomer, i.e. a compound having a carbon-carbon double bond. A vinyl monomer is excellent in alternating copolymerizability with a fluoroolefin, whereby the polymerization yield can be increased. Further, even when it remains unreacted, it presents a less impact on the coating film, and it can be easily removed in the production process.

The vinyl monomer may, for example, be a vinyl ether, an allyl ether, a vinyl carboxylate, an allyl carboxylate, an olefin, an unsaturated carboxylic acid ester, etc.

The vinyl ether, allyl ether, vinyl carboxylate and olefin, may, for example, be those exemplified above as the monomer (m2). The monomer having a hydroxy group, may, for example, be a hydroxyalkyl vinyl ether or a hydroxyalkyl vinyl ester, exemplified above as the monomer (m1).

The unsaturated carboxylic acid ester may, for example, be an alkyl (meth)acrylate, such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-amyl (meth)acrylate, isoamyl (meth)acrylate, n-hexyl (meth)acrylate, isohexyl (meth)acrylate, 2-ethylhexyl (meth)acrylate, lauryl (meth)acrylate, etc.

As the monomer (m4), one type may be used alone, or two or more types may be used in combination.

As a combination of monomers to constitute the carboxy group-containing fluoropolymer (A2), from the viewpoint of wettability to a substrate, the following combination (4) is preferred, and the combination (5) is particularly preferred.

### Combination (4)

Fluoroolefin: TFE or CTFE,
Monomer (m3) :(meth)acrylic acid,
Monomer (m4): ethylene glycol monoallyl ether, a vinyl carboxylate and an unsaturated carboxylic acid ester.

### Combination (5)

Fluoroolefin: CTFE,
Monomer (m3): acrylic acid,
Monomer (m4): ethylene glycol monoallyl ether, vinyl acetate, vinyl versatate and methyl acrylate.

Like combinations (4) and (5), in a case where an allyl ether and a vinyl ester are used as the monomer (m4), the obtainable carboxy group-containing fluoropolymer (A2) will be a copolymer having high alternating copolymerizability of a fluoroolefin and (allyl ether/vinyl ester), and like these cases, in a case where tert-butyl vinyl ether is not used as the monomer (m3), by using acrylic acid or methacrylic acid, it will be easy to obtain a carboxy group-containing fluoropolymer (A2), of which the melt viscosity by a rotary rheometer becomes to be within the above-mentioned range.

The proportion of the fluoroolefin units is preferably from 30 to 70 mol%, particularly preferably from 40 to 60 mol%, in all units (100 mol%) in the carboxy group-containing fluoropolymer (A2).

When the fluoroolefin units are at least the above lower limit value, the coating film will be excellent in weather resistance. When the fluoroolefin units are at most the above upper limit value, the antifouling property, water resistance, acid resistance and alkali resistance of the coating film will be more excellent.

Further, when the proportion of fluoroolefin units is within the above range, it will be easy to obtain a carboxy group-containing fluoropolymer (A2), of which the melt viscosity by a rotary rheometer becomes to be within the above-mentioned range.

The proportion of monomer (m3) units is preferably from 0.5 to 20 mol%, particularly preferably from 1 to 15 mol%, in all units (100 mol%) in the carboxy group-containing fluoropolymer (A2). If the proportion of monomer (m3) units is at least the above lower limit value, the antifouling property, water resistance, acid resistance and alkali resistance of the coating film will be more excellent. When the proportion of monomer (m3) units is at most the above upper limit value, the scratch resistance of the coating film will be excellent.

Further, when the proportion of monomer (m3) units is within the above range, it will be easy to obtain a carboxy group-containing fluoropolymer (A2), of which the melt viscosity by a rotary rheometer becomes to be within the above-mentioned range.

The proportion of monomer (m4) units is preferably from 20 to 60 mol%, particularly preferably from 30 to 60 mol%, in all units (100 mol%) in the carboxy group-containing fluoropolymer (A2). When the proportion of monomer (m4) units is at least the above lower limit value, the glass transition temperature of the carboxy group-containing fluoropolymer (A2) will be proper, and it will be easy to produce a powder coating material. When the proportion of monomer (m4) units is at most the above upper limit value, blocking of the coating film will be suppressed, and the flexibility will be excellent.

Further, when the proportion of monomer (m4) units is within the above range, it will be easy to obtain a carboxy group-containing fluoropolymer (A2), of which the melt viscosity by a rotary rheometer becomes to be within the above-mentioned range.

The number-average molecular weight of the carboxy group-containing fluoropolymer (A2) is preferably from 4,000 to 15,000, more preferably from 5,000 to 12,000. When the number-average molecular weight of the carboxy group-containing fluoropolymer (A2) is at least the above lower limit value, the coating film will be excellent in water resistance and salt water resistance. When the number-average molecular weight of the carboxy group-containing fluoropolymer (A2) is at most the above upper limit value, the surface smoothness of the coating film will be excellent.

### (Fine particles (B))

The fine particles (B) are composed of at least one member selected from silica (silicon oxide), alumina (aluminum oxide), titania (titanium oxide) and zinc oxide, and have a specific surface area of from 10 to 500 m²/g and an average primary particle size within a range of from 0.1 to 100 nm. The fine particles (B) may be composed of any one among silica fine particles, alumina fine particles, titania fine particles and zinc oxide fine particles, or may be a mixture of two or more of these fine particles.

Further, the fine particles (B) may be one having the same function and properties as oxide-type additives (an inorganic ultraviolet absorber, a matting agent, a color pigment, etc.) as described later. However, in the present invention, fine particles included in the category of the fine particles (B) shall be excluded from the additives described later.

In the composition for powder coating material, the fine particles (B) are contained in an amount of from 0.01 to 10 parts by mass, preferably from 0.05 to 9.0 parts by mass, more preferably from 0.1 to 8.0 parts by mass, per 100 parts by mass of the fluoropolymer (A). By a powder coating material comprising a powder composed of the composition for powder coating material, which comprises the fine particles (B) and the above-mentioned fluoropolymer (A) in the above-mentioned proportions, it is possible to form a coating film which has no poor appearance such as seeding, cissing, etc. and which is excellent also in surface smoothness. When the content of fine particles (B) is at least the lower limit value within the above range, the surface smoothness of the coating film becomes good, and when it is at most the upper limit value, at the same time as the surface smoothness of the coating film becomes good, the problem of seeding, cissing, etc. will be resolved, and the appearance will be good.

This is conceivably for the following reason.

That is, on the surface of each particle of the powder which constitutes the composition for powder coating material, at least a portion of the fine particles (B) contained in the composition for powder coating material is present. It is considered that by such presence of fine particles (B) on the surface of each particle, the frictional resistance between the particles is reduced to improve slipping between the particles. Thus, it is considered that the particles will be tightly packed to form a coating film excellent in surface smoothness. Further, it is considered that the amount of the fine particles (B) is proper, so that poor appearance such as seeding, cissing, etc. to be caused by the fine particles (B) is suppressed.

The specific surface area of fine particles (B) is, as described above, from 10 to 500 m²/g, preferably from 15 to 400 m²/g, more preferably from 20 to 300 m²/g. When the specific surface area is at most the upper limit value in the above range, agglomeration of the fine particles (B) will be suppressed, and seeding tends to be less likely to occur on the surface of the coating film, and the appearance becomes good. Further, when it is at least the lower limit value in the above range, the strength of the coating film will be improved, whereby cracking will be less likely to occur. Also, bending processability will be improved.

The average primary particle size of the fine particles (B) is, as described above, from 0.1 to 100 nm, preferably from 0.5 to 90 nm, more preferably from 1.0 to 80 nm. When the average primary particle size is at least the lower limit value in the above range, agglomeration of the fine particles (B) will be suppressed, and seeding tends to be less likely to occur on the surface of the coating film, and the appearance becomes good. Further, when it is at most the upper limit value in the above range, the strength of the coating film will be improved, so that cracking tends to be less likely to occur. Also, bending processability will be improved.

The fine particles (B) are preferably at least one member selected from silica produced by a vapor phase method, alumina produced by a vapor phase method, titania produced by a vapor phase method, and zinc oxide produced by a vapor phase method. Silica, alumina, titania and zinc oxide, produced by vapor phase methods tend to have the above-mentioned specific surface areas and average primary particle sizes.

The fine particles (B) are preferably surface-treated with an organic silicon compound. When surface treated with an organic silicon compound, the surface of the fine particles (B) becomes hydrophobic and tends to have a negative triboelectric chargeability, so that the powder coating material containing such fine particles (B) becomes suitable for corona type electrostatic powder coating.

In the present invention, the organic silicon compound is meant for a silicon compound having an organic group (one wherein a terminal atom bonded to the silicon atom is a carbon atom) bonded to a silicon atom and a hydroxy group or a hydrolyzable group (a group reactive with water to form a hydroxy group) bonded to the silicon element. The organic silicon compound may be a partially hydrolyzed condensate of a silicon compound having an organic group and a hydrolyzable group.

The organic group may, for example, be a hydrocarbon group such as an alkyl group or an alkenyl group, or a hydrocarbon group having a reactive group such as a hydroxy group, a carboxy group, an amino group, an acyloxy group, etc. The hydrolysable group may, for example, be a chlorine atom, an alkoxy group, etc.

The organic silicon compound may, for example, be methyltrichlorosilane, dimethyldichlorosilane, trimethylchlorosilane, hexamethyldisilazane, silicone oil, a silane coupling agent (such as 3-(meth)acryloyloxy propyl trimethoxy silane, 3-(meth)acryloyloxy propyl methyl dimethoxysilane, 3-aminopropyl trimethoxysilane, 3-glycidoxypropyl methyl trimethoxy silane, 3-mercaptopropyl trimethoxysilane, 3-isocyanate propyl trimethoxysilane, trimethoxy vinyl silane, etc.), a cyclic siloxane, etc., and from the viewpoint of the availability of raw materials and ease of surface treatment, an alkyl chlorosilane, such as methyltrichlorosilane, dimethyldichlorosilane, trimethylchlorosilane, etc., is preferred. As the organic silicon compound, one type may be used alone, or two or more types may be used in combination.

The amount of the organic silicon compound for treatment, is preferably from 0.01 to 5.0 mass%, more preferably from 0.5 to 3.0 mass%, to100 mass% of the fine particles (B).

The fine particles (B) are preferably ones which have undergone disintegration treatment. Particles produced by a vapor phase method and surface treated, are in the form of aggregates in many cases. Accordingly, by going through the disintegration treatment after the surface treatment, they tend to have the above-mentioned specific surface area and average primary particle size. Such disintegration treatment may be carried out by a method using a pulverizer, such as a pin mill or a fine mill.

### (Resin other than fluoropolymer (A))

The composition for powder coating material of the present invention may contain a resin other than the fluoropolymer (A). The resin other than the fluoropolymer (A) will be hereinafter referred to as the "resin (C)".

As the resin (C), preferred is a non-fluorinated resin for coating material, and more preferred is a resin which is at least one member selected from an acrylic resin, a polyester resin, a polyurethane resin, an epoxy resin and a silicone resin, and of which the melt viscosity at 190°C measured by a rotary rheometer at a temperature-raising rate of 10°C/min is within a range of from 0.1 to 10 Pa·s. The above melt viscosity of the resin (C) is more preferably from 0.2 to 9 Pa·s, particularly preferably from 0.3 to 8 Pa·s, from such a viewpoint that a coating film excellent in surface smoothness can be thereby easily obtainable.

### <Acrylic resin>

An acrylic resin is a polymer having (meth)acrylate units. The acrylic resin may have reactive groups such as carboxy groups, hydroxy groups, sulfo groups, etc. The acrylic resin having reactive groups is, when the composition for powder coating material contains a pigment such as titanium oxide pigment, excellent in the dispersibility thereof.

The glass transition temperature of the acrylic resin is preferably from 30 to 60°C. When the glass transition temperature is at least the above lower limit value, the coating film is less likely to be blocked. When the glass transition temperature of the acrylic resin is at most the above upper limit value, the surface smoothness of the coating film will be further excellent.

The number-average molecular weight of the acrylic resin is preferably from 5,000 to 100,000, particularly preferably from 30,000 to 100,000. When the number-average molecular weight of the acrylic resin is at least the above lower limit value, the coating film will be less likely to be blocked. When the number-average molecular weight of the acrylic resin is at most the above upper limit value, the surface smoothness of the coating film will be further improved.

The mass average molecular weight of the acrylic resin is preferably from 6,000 to 150,000, more preferably from 40,000 to 150,000, particularly preferably from 60,000 to 150,000. When the mass average molecular weight of the acrylic resin is at least the above lower limit value, the coating film will be less likely to be blocked. When the mass average molecular weight of the acrylic resin is at most the above upper limit value, the surface smoothness of the coating film will be further excellent.

In a case where the acrylic resin has carboxy groups, the acid value of the acrylic resin is preferably from 150 to 400 mgKOH/g. When the acid value of the acrylic resin is at least the above lower limit value, when the composition for powder coating material contains a pigment such as titanium oxide pigment, there will be a dispersion improving effect. When the acid value of the acrylic resin is at most the above upper limit value, the coating film will be excellent in moisture resistance. In a case where the acrylic resin has hydroxy groups, the hydroxy value of the acrylic resin is, from the viewpoint of adhesion to a substrate, preferably from 1 to 250 mgKOH/g.

Here, with respect to a non-fluorinated resin, the hydroxy value may be measured in accordance with JIS K1557-1: 2007 (ISO 14900: 2001), or JISK 0070: 1992. With respect to a non-fluorinated resin, the acid value may be measured in accordance with JIS K0070: 1992, or JIS K5601-2-1: 1999.

As the acrylic resin, a resin, of which the above-mentioned melt viscosity is within a range of from 0.1 to 10 Pa·s, may be selected for use among commercial products.

### <Polyester resin>

The polyester resin may be one having polycarboxylic acid units and polyhydric alcohol units, and having optionally units other than these two units (for example, hydroxycarboxylic acid units, etc.).

A terminal of the polymer chain of the polyester resin is a monovalent unit, and in a case where the terminal unit is a polycarboxylic acid unit, such a terminal unit has a carboxy group, and in a case where the terminal unit is a polyhydric alcohol unit, such a terminal unit has a hydroxy group.

Units other than terminal units are composed of divalent or higher valent units, and a linear polymer is composed solely of divalent units except for the terminal units. That is, the linear polyester resin is composed solely of divalent units derived from a polycarboxylic acid and divalent units derived from a polyhydric alcohol, except for the terminal units. A branched polyester resin has at least one trivalent or higher valent unit, and other than such a trivalent or higher valent unit and terminal units, consists substantially solely of divalent units.

As the polyester resin, a linear polymer or a branched polymer having a small number of branches, is preferred, and a linear polymer is particularly preferred. A branched polymer having many branches tends to have a higher softening point or a higher melting temperature, and therefore, in a case where the polyester resin is a branched polymer, the softening point is preferably at most 200°C. As the polyester resin, preferred is a polyester resin which is solid at ordinary temperature, and of which the softening point is from 100 to 150°C.

The number-average molecular weight of the polyester resin is preferably at most 5,000. The mass average molecular weight of the polyester resin is preferably from 2,000 to 20,000, particularly preferably from 2,000 to 10,000. As the polyester resin, it is further preferred that the number average molecular weight is at most 5,000 and the mass average molecular weight is from 2,000 to 20,000, and it is particularly preferred that the number average molecular weight is at most 5,000 and the mass average molecular weight is from 2,000 to 10,000.

The polyester resin may have reactive groups capable of reacting with a curing agent as described later. At least a portion of a terminal unit of the polymer chain of the polyester resin is preferably a monovalent polybasic carboxylic acid unit or a monovalent polyhydric alcohol unit, and in the case of the former, a free carboxy group of such a unit, or in the latter case, a free hydroxy group of such a unit functions as a reactive group. A unit having a reactive group may be a unit other than a terminal unit. For example, a divalent polyhydric alcohol unit derived from a polyhydric alcohol having three or more hydroxy groups, is a unit having a free hydroxy group, and thus, the polyester resin may have a divalent or higher velent unit having such a reactive group.

As the reactive group in the polyester resin, a hydroxy group is preferred from the viewpoint of excellent water resistance, alkali resistance and acid resistance of the coating film. A polyester resin usually has hydroxy groups and carboxy groups, and as the polyester resin, preferred is a polyester resin having mainly hydroxy groups.

The hydroxy value of the polyester resin is preferably from 20 to 100 mgKOH/g, particularly preferably from 20 to 80 mgKOH/g. The acid value of the polyester resin is preferably from 1 to 80 mgKOH/g, particularly preferably from 3 to 50 mgKOH/g. Measurements of the hydroxy value and the acid value are carried out in accordance with JIS K0070: 1992.

As the polyester resin, from the viewpoint of the impact resistance and processability of the coating film, the weather resistance of the coating film, and the availability, preferred is a polyester resin having units derived from a C₈₋₁₅ aromatic poly basic carboxylic acid and units derived from a C₂₋₁₀ polyhydric alcohol.

The polybasic carboxylic acid units are preferably units derived from a C₈₋₁₅ aromatic polybasic carboxylic acid. The C₈₋₁₅ aromatic polybasic carboxylic acid is a compound having an aromatic ring and two or more carboxy groups, and the carboxy groups are attached to carbon atoms of the aromatic ring. Further, it may be an anhydride having a structure wherein two carboxy groups are dehydrated.

The aromatic ring is preferably a benzene ring or a naphthalene ring, and a benzene ring is particularly preferred. In the case of the benzene ring, there may be present two or more in one molecule.

The number of carboxy groups in the aromatic polybasic carboxylic acid is preferably 2 to 4, particularly preferably 2.

The C₈₋₁₅ aromatic polybasic carboxylic acid may, for example, be phthalic acid, isophthalic acid, terephthalic acid, naphthalene dicarboxylic acid, trimellitic acid, pyromellitic acid, phthalic anhydride, etc.

As the polybasic carboxylic acid units, isophthalic acid units are preferred from such a viewpoint that the coating film will be excellent in weather resistance.

As the polyhydric alcohol units, preferred are units derived from a polyhydric alcohol having from 2 to 10 carbon atoms. As the polyhydric alcohol, an aliphatic polyhydric alcohol compound, or an alicyclic polyhydric alcohol is preferred, and an aliphatic polyhydric alcohol is particularly preferred. The number of hydroxy groups in the polyhydric alcohol is preferably from 2 to 4, particularly preferably 2.

The polyhydric alcohol having from 2 to 10 carbon atoms, may, for example, be ethylene glycol, diethylene glycol, triethylene glycol, 1,2-propanediol, 1,3-propanediol, 1,3-butanediol, 1,4-butanediol, 1,5-pentanediol, neopentyl glycol, spiro glycol, 1,10-decanediol, 1,4-cyclohexanedimethanol, trimethylolethane, trimethylolpropane, glycerin, pentaerythritol, etc.

As the polyhydric alcohol units, from the viewpoint of excellent adhesion to a substrate and excellent flexibility, preferred are units derived from a polyhydric alcohol having from 3 to 8 carbon atoms, and particularly preferred are units derived from a polyhydric alcohol having from 4 to 6 carbon atoms.

As the polyhydric alcohol, preferred is neopentyl glycol, 1,2-pentanediol, 1,5-pentanediol, trimethylolpropane, etc., and in view of easy availability, neopentyl glycol or trimethylol propane is particularly preferred.

As the polyester resin, a resin, of which the above-mentioned melt viscosity is within a range of from 0.1 to 10 Pa·s, may be selected for use among commercial products. Such commercially available products include the following ones. Here, in (), the value of the melt viscosity is shown.

"CRYLCOAT (trademark) 4890-0" (5.2 Pa·s) manufactured by Daicel-Allnex Ltd.

"U-Pica Coat (trade name) GV740" (1.69 Pa·s) manufactured by Japan U-PICA Co. Ltd.

"Vylon (trade name) 220" (0.55 Pa·s) manufactured by Toyobo Co., Ltd.

"URALAC (trade name) P6504" (3.06 Pa·s) manufactured by DSM.

### <Polyurethane resin>

As the polyurethane resin, a resin, of which the above-mentioned melt viscosity is within a range of from 0.1 to 10 Pa·s may be selected for use among commercial products.

### <Epoxy resin>

The epoxy resin may, for example, be a bisphenol A type epoxy resin, a bisphenol F type epoxy resin, etc., and a resin, of which the above-mentioned melt viscosity is within a range of from 0.1 to 10 Pa·s may be selected for use among commercial products.

### <Silicone resin>

As the silicone resin, a resin, of which the above-mentioned melt viscosity is within a range of from 0.1 to 10 Pa·s may be selected for use among commercial products.

### (Curing agent)

The composition for powder coating material of the present invention may contain a curing agent, in a case where at least one of the fluoropolymer (A) and the resin (C) has reactive groups (hydroxy groups, carboxy groups, etc.). A curing agent is a compound which reacts with the reactive groups to cure the fluoropolymer (A) or the resin (C) by crosslinking or increasing the molecular weight. The curing agent has two or more reactive groups capable of reacting with the reactive groups of the fluoropolymer (A) or the resin (C). The reactive groups of the curing agent are preferably reactive groups capable of reacting at the time when the powder coating material comprising a powder composed of the composition for powder coating material is heated melted, since ones reactive with the fluoropolymer (A) or the resin (C) at room temperature are undesirable. For example, blocked isocyanate groups are preferred rather than isocyanato groups having high reactivity at room temperature. When the powder coating material is heated and melted, blocked isocyanate groups become isocyanate groups as the blocking agent is eliminated, and the isocyanate groups will act as reactive groups.

As the curing agent, it is possible to use a known compound, for example, a blocked isocyanate-type curing agent, an amine type curing agent (a melamine resin, a guanamine resin, a sulfonamide resin, a urea resin, an aniline resin, etc. having an amino group to which a hydroxymethyl group or an alkoxymethyl amino group is bonded), a β-hydroxyalkylamide-type curing agent, an epoxy-type curing agent (triglycidyl isocyanurate, etc.).

From the viewpoint of excellent adhesion to a substrate, processability of the product after coating, and water resistance of the coating film, in the case of the hydroxy group-containing fluoropolymer (A1), a blocked isocyanate-type curing agent is particularly preferred. In the case of the carboxy group-containing fluoropolymer (A2), as the curing agent, β-hydroxyalkyl amide-type curing agent or a triglycidyl isocyanurate-type curing agent is preferred.

As the curing agent, one type may be used alone, or two or more types may be used in combination.

As the blocked isocyanate-type curing agent, one being solid at room temperature is preferred.

As the blocked isocyanate-type curing agent, preferred is one produced by reacting a polyisocyanate obtained by reacting an aliphatic, aromatic or araliphatic diisocyanate and a low-molecular compound having active hydrogen, with a blocking agent, followed by masking.

The diisocyanate may, for example, be tolylene diisocyanate, 4,4'-diphenylmethane diisocyanate, xylylene diisocyanate, hexamethylene diisocyanate, 4,4'-methylenebis(cyclohexyl isocyanate), methylcyclohexane diisocyanate, bis(isocyanatomethyl) cyclohexane, isophorone diisocyanate, dimer acid diisocyanate, lysine diisocyanate, etc.

The low molecular compound having active hydrogen may, for example, be water, ethylene glycol, propylene glycol, trimethylolpropane, glycerin, sorbitol, ethylenediamine, ethanolamine, diethanolamine, hexamethylenediamine, isocyanurate, uretdione, a low molecular weight polyester containing a hydroxy group, polycaprolactone, etc.

The blocking agent may, for example, be an alcohol (methanol, ethanol, benzyl alcohol, etc.), a phenol (phenol, cresol, etc.), a lactam (caprolactam, butyrolactam, etc.), an oxime (cyclohexanone, oxime, methyl ethyl ketoxime, etc.).

### (Curing catalyst)

The composition for powder coating material may contain a curing catalyst as the case requires. The curing catalyst is one which promotes the curing reaction and imparts good chemical properties and physical properties to the coating film.

In the case of using a blocked isocyanate curing agent, the curing catalyst is preferably a tin catalyst (tin octylate, tributyltin laurate, dibutyltin dilaurate, etc.). As the curing catalyst, one type may be used alone, or two or more types may be used in combination.

### (Other components)

The composition for powder coating material may contain, as the case requires, as other components, at least one member among various additives such as ultraviolet absorbers, pigments, etc. (provided that they do not fall in any of the fluoropolymer (A), fine particles (B) and resin (C)).

The various additives may, for example, be ultraviolet absorbers, pigments, light stabilizers (hindered amine light stabilizers, etc.), matting agents (polytetrafluoroethylene fine particles, silicone resin fine particles, etc.), surfactants (nonionic surfactant agents, cationic surface active agents, amphoteric surface active agents or anionic surface active agents), leveling agents, surface control agents (ones to improve the surface smoothness of the coating film), degassing agents (ones having an action to discharge, out of the coating film, air included in the powder, gas, moisture, etc. from the curing agent, so that they do not remain inside of the coating film, and here, they are usually solid, but become to have a very low viscosity as melted), fillers, heat stabilizers, thickeners, dispersing agents, antistatic agents, rust inhibitors, silane coupling agents, antifouling agents, low pollution treatment agents, pigments, etc. The composition for powder coating material particularly preferably contains an ultraviolet absorber and a pigment.

As the ultraviolet absorber, any ultraviolet absorber among organic ultraviolet absorbers and inorganic ultraviolet absorbers, may be used.

As the ultraviolet absorber, one type may be used alone, or two or more types may be used in combination.

The organic ultraviolet absorber may, for example, be a salicylic acid ester-type ultraviolet absorber, a benzotriazole ultraviolet absorber, a benzophenone ultraviolet absorber, a cyanoacrylate-type UV absorber, etc.

As the organic ultraviolet absorber, a compound having a molecular weight of from 200 to 1,000 is preferred. When the molecular weight is at least 200, it is less likely to volatilize in the process for forming a coating film, and it can remain in the coating film. When the molecular weight is at most 1,000, it is easy to disperse it in the coating film.

As the organic ultraviolet absorber, a compound having a melting point of from 50 to 150°C is preferred. When the melting point is at least 50°C, it is less likely to volatilize in the process for forming a coating film, and it can remain in the coating film. when the melting point is at most 150°C, it becomes easy to melt it in the process of forming a coating film, and it is easy to disperse it in the coating film.

As the organic ultraviolet absorber, a compound having a volatilization temperature of from 180 to 450°C is preferred, and a compound having a volatilization temperature of from 220 to 400°C is particularly preferred. A temperature condition of from 150 to 220°C is required in the process for forming the coating film, and therefore, as long as it is within the above range, the volatilization is less likely to occur, and it can remain in the coating film.

As the inorganic ultraviolet absorber, a filler-type inorganic ultraviolet absorber containing an UV absorbing oxide (zinc oxide, cerium oxide, etc.) may be mentioned.

As the inorganic ultraviolet absorber, preferred is composite particles of zinc oxide and titanium oxide, composite particles of cerium oxide and titanium oxide, composite particles of zinc oxide and cerium oxide, or composite particles of titanium oxide, zinc oxide and cerium oxide.

Here, these particles of ultraviolet absorbing oxides are different from the fine particles (B), and in the case of an UV absorbing oxide made of the same material as the fine particles (B), its specific surface area is outside the range of from 10 to 500 m²/g, or its average primary particle size is outside the range of from 0.1 to 100 nm.

As the pigment, preferred is at least one member selected from the group consisting of luster pigments, anticorrosive pigments, coloring pigments and extender pigments.

The particles of a pigment are different from the fine particles (B), and in the case of a pigment made of the same material as the fine particles (B), its specific surface area is outside the range of from 10 to 500 m²/g, or its average primary particle size is outside of the range of from 0.1 to 100 nm.

Luster pigments are pigments to let a coating film shine. The luster pigments may, for example, be aluminum powder, nickel powder, stainless steel powder, copper powder, bronze powder, gold powder, silver powder, mica powder, graphite powder, glass flakes, flake-like iron oxide powder, etc.

Anticorrosive pigments are pigments to prevent corrosion or modification of a substrate, for a substrate which requires corrosion resistance. As such anticorrosive pigments, preferred are lead-free anticorrosive pigments presenting a less impact on the environment. The lead-free anticorrosive pigments may, for example, be zinc cyanamide, zinc oxide, zinc phosphate, calcium magnesium phosphate, zinc molybdate, barium borate, zinc calcium cyanamide, etc.

Coloring pigments are pigments for coloring the coating film. The coloring pigments may, for example, be titanium oxide, carbon black, iron oxide, phthalocyanine blue, phthalocyanine green, quinacridone, isoindolinone, benzimidazolone, dioxazine etc.

Extender pigments are pigments to improve the hardness of the coating film and to increase the thickness of the coating film. For example, an extender pigment is preferably incorporated in that when a coated article such as a building exterior member is cut, the cut surface of the coating film can be made clean. The extender pigments may, for example, be talc, barium sulfate, mica, calcium carbonate, etc.

Extender pigments are pigments to improve the hardness of the coating film and to increase the thickness of the coating film. For example, an extender pigment is preferably incorporated in that when a coated article such as a building exterior member is cut, the cut surface of the coating film can be made clean. The extender pigments may, for example, be talc, barium sulfate, mica, calcium carbonate, etc.

### (Content of each component)

In a case where the composition for powder coating material contains a resin (C), the mass ratio (A)/(C) of the fluoropolymer (A) to the resin (C) is preferably from 90/10 to 10/90, more preferably from 80/20 to 20/80, particularly preferably from 40/60 to 20/80. When the mass ratio is within the above range, the weather resistance of the coating film to be formed will be excellent, and at the same time, it is possible to reduce the cost for the coating film.

In a case where the composition for powder coating material contains a curing agent, the content of the curing agent in the composition for powder coating material is preferably from1 to 55 parts by mass, particularly preferably from 3 to 55 parts by mass, per 100 parts by mass of the total of the fluoropolymer (A) and the resin (C) in the composition for powder coating material.

In a case where the curing agent is a blocked isocyanate curing agent, the content of the blocked isocyanate curing agent in the composition for powder coating material, is such that the molar ratio of isocyanate groups to hydroxy groups in the composition for powder coating material is preferably from 0.05 to 1.5, particularly preferably from 0.8 to 1.2. When the molar ratio is at least the above lower limit value, the degree of hardness of the coating film will be high, and the coating film will be excellent in hardness, chemical resistance, etc. When the molar ratio is at most the above upper limit value, the coating film is less likely to become brittle, and the coating film will be excellent in heat resistance, chemical resistance, moisture resistance, etc.

In a case where the composition for powder coating material contains a curing catalyst, the content of the curing catalyst in the composition of powder coating material, is preferably from 0.0001 to 10.0 parts by mass per 100 parts by mass of the total of the fluoropolymer (A) and the resin (C) in the composition of powder coating material. When the content of the curing catalyst is at least the above lower limit value, the catalytic effect tends to be sufficiently obtainable. When the content of the curing catalyst is at most the above upper limit value, a gas such as air, etc. included during the melting and curing process of the powder coating material, tends to be readily discharged, whereby a decrease in the heat resistance, weather resistance and water resistance caused by a remaining gas can be reduced.

In a case where the composition for powder coating material contains a pigment, the content of the pigment is preferably from 20 to 200 parts by mass, particularly preferably from 50 to 150 parts by mass, per 100 parts by mass of the total of the fluoropolymer (A) and the resin (C).

In a case where various additives such as ultraviolet absorbers, pigments, etc. are contained in the composition of powder coating material, their total amount is preferably contained within such a range that the sum of the fluoropolymer (A) and the resin (C) to the total amount of the composition for powder coating material, would be at least 30 mass%.

### [Method for producing composition for powder coating material]

The composition for powder coating material may be produced by a known method.

Specifically, by mixing the fluoropolymer (A) and the fine particles (B), and, as the case requires, the resin (C), a curing agent, a curing catalyst and various additives, by e.g. a high-speed mixer, a V-type mixer or an inversion mixer, a composition for powder coating material is obtainable. It is preferred that each component is previously pulverized into a powder form.

The obtained composition for powder coating material is melt-kneaded by e.;g. a monoaxial extruder, a biaxial extruder or a planetary gear, and the kneaded product obtained by the melt-kneading is pulverized by a pulverizer such as a pin mill, a hammer mill, a jet mill, etc. Thereafter, if necessary, the pulverized product obtained by the pulverization is classified. Thus, a powder made of a composition for powder coating material is obtainable. The kneaded product is, after cooling, preferably formed into pellets.

### [Powder coating material]

The powder coating material of the present invention comprises a powder composed of the composition for powder coating material of the present invention. The powder coating material of the present invention preferably contains at least 50 mass%, or at least 70 mass%, or may contain 100 mass%, of the powder composed of the composition for powder coating material of the present invention.

A component other than the powder composed of the composition for powder coating material of the present invention, to be contained in the powder coating material, may be at least one member of other components, as previously exemplified as a component which may be contained, as the case requires, in the composition for powder coating material.

### [Coated article]

The coated article of the present invention is one having a coating film formed from the powder coating material of the present invention, on the surface of a substrate, and may be formed by a method of applying the powder coating material of the present invention on a substrate, and forming a coating film in a molten state made of a melt of the powder coating material, followed by cooling the same. If a component in the powder coating material has a reactivity, a curing reaction takes place.

The coating film in a molten state made of a melt of the powder coating material may be formed at the same time as coating of the powder coating material to the substrate, or may be formed by depositing the powder coating material to a substrate, followed by heating and melting it on the substrate.

In a case where the powder coating material has a reactivity, the curing reaction of the reactive components starts substantially at the same time as the powder coating material is heated and melted, and therefore, the heat-melting of the powder coating material and the deposition on the substrate are required to be carried out approximately at the same time, or it is necessary to carry out the deposition of the powder coating material on the substrate, followed by heat-melting the powder coating material.

The material for the substrate may, for example, be a metal such as aluminum, iron, zinc, tin, titanium, lead, special steel, stainless steel, copper, magnesium, brass, etc. and can be selected depending upon e.g. the application of the coated article. The substrate may contain two or more kinds among the exemplified metals.

As the material for the substrate is, from the viewpoint of lightweight and excellent corrosion resistance and strength, aluminum is preferred.

The shape, size, etc. of the substrate, are not particularly limited.

The coating method may, for example, be an electrostatic coating method, an electrostatic spraying method, an electrostatic immersion method, a blowing method, a spraying method, a thermal spraying method, a plasma spraying method, etc.. An electrostatic coating method using a powder coating gun is preferred, from such a viewpoint that even when the coating film is made thin, it is possible to obtain a coating film excellent in surface smoothness, and further, the coating film is excellent in hiding properties.

A coating film in a molten state is cooled to room temperature (20 to 25°C), to form a coating film on the substrate.

The cooling may be either quenching or annealing.

The thickness of the coating film is preferably from 20 to 1,000 µm, more preferably from 20 to 500 µm, particularly preferably from 20 to 300 µm, and may be suitably set depending on e.g. the weather resistance required for the coating film.

The 60° gloss of the coating film is preferably from 10 to 90°, more preferably from 15 to 89°, particularly preferably from 20 to 88°. The 60° gloss of the coating film may be suitably set depending on e.g. the application of the coated article.

The 60° gloss of the coating film can be controlled, for example, by a method of adjusting the type and amount of the fine particles (B) to be blended to the composition for powder coating material, a method of adjusting the type and amount of the resin (C) (utilizing the difference in the solubility parameter (SP value)), or a method of blending a matting agent (polytetrafluoroethylene fine particles (for example, "Ceridust 9205F" manufactured by Clariant), silicone resin fine particles (for example, "Tospearl 145" manufactured by Momentive Inc.)).

In this specification, the 60° gloss is in accordance with JIS Z8741.

Specific applications of the coated article include exterior members for construction, such as an aluminum composite panel, an aluminum panel curtain wall, an aluminum frame for curtain wall, an aluminum window frame, etc., exterior members, such as an oil tank, a natural gas tank, a ceramic building material, a housing exterior material, an automobile member, an aircraft member, a railway vehicle member, a solar cell BS member, a wind power tower, a wind power blade, etc.

Especially, the coated article of the present invention has a coating film which is formed by the powder coating material of the present invention, which has no poor appearance such as seeding, cissing, etc., and which is excellent also in surface smoothness, so that it is useful for a wide range of applications with a wide coating area such as a high-rise building exterior material.

### EXAMPLES

Hereinafter, the present invention will be described in detail with reference to Examples, but the present invention is not limited by these Examples.

Here, among the following Ex, Ex. 1 to 4 are Examples of the present invention, and Ex. 5 to 8 are Comparative Examples.

### [Various measurement methods]

### (Copolymerization composition of fluoropolymer (A))

Obtained by ¹H-NMR and ¹³C-NMR.

### (Melt viscosity)

The melt viscosity at 190°C is a value measured under the following conditions by using a rotary rheometer (Rheometer MCR302 manufactured by Anton Paar Japan KK).

Temperature: The temperature was raised from 130°C to 200°C, and the melt viscosity at 190°C was measured.

Temperature-raising rate: 10°C/min
Frequency: 1 Hz

### (Glass transition temperature (Tg))

The glass transition temperature (Tg) is a value measured by a differential calorimeter (DSC).

### (Number average molecular weight (Mn))

The number average molecular weight (Mn) is a value obtained as calculated as polystyrene by gel permeation chromatography (GPC).

### [Production Example 1: production of fluoropolymer (A-1)]

Into a stainless steel autoclave equipped with a stirrer with an inner volume of 2,500 mL, 210.7g of cyclohexyl vinyl ether (CHVE), 282.1g of hydroxybutyl vinyl ether (HBVE), 122.0g of ethyl vinyl ether (EVE), 647.2g of xylene, 168.8g of ethanol, 11.0g of potassium carbonate, 7.0g of a 50 mass% xylene solution of tert-butyl peroxypivalate (PBPV) and 680.0g of chlorotrifluoroethylene (CTFE) were introduced. Then, the temperature was gradually raised, and after reaching 55°C, it was held for 20 hours. It was then raised to 65°C and kept for 5 hours. After cooling, the residue was removed by filtration to obtain a xylene solution of fluoropolymer (A-1).

The obtained xylene solution was subjected to thin film evaporation and dried to a solid content concentration of 99.5 mass%.

The copolymerization composition of the fluoropolymer (A-1) after drying, thus obtained, was CTFE units/HBVE units/CHVE units/EVE units = 50/20/15/15 (mol%). Further, the fluoropolymer (A-1) had a glass transition temperature (Tg) of 34°C, a number average molecular weight (Mn) of 7,000, and a melt viscosity at190°C of 0.7 Pa·s.

### [Production Example 2: production of fluoropolymer (A-2)]

Into a stainless steel autoclave equipped with a stirrer with an inner volume of 2,500 mL, 104.0g of tert-butyl vinyl ether (t-BuVE), 132.0g of hydroxybutyl vinyl ether (HBVE), 385.0g of vinyl pivalate (VPV), 555.0g of xylene, 157.0g of ethanol, 11.0g of potassium carbonate, 7.0g of a 50 mass% xylene solution of tert-butyl peroxypivalate (PBPV) and 630.0g of chlorotrifluoroethylene (CTFE) were introduced. Then, the temperature was gradually raised, and after reaching 55°C, it was held for 20 hours. Then, the temperature was raised to 65°C and held for 5 hours. Then, after cooling, the residue was removed by filtration to obtain a xylene solution of fluoropolymer (A-2).

The obtained xylene solution was subjected to thin film evaporation and dried to a solid content concentration of 99.5 mass%.

The copolymerization composition of the fluoropolymer (A-2) after drying thus obtained was CTFE units/HBVE units/t-BuVE units/VPV units = 50/11/6/33 (mol%). The fluoropolymer (A-2) had a glass transition temperature (Tg) of 56°C, a number average molecular weight (Mn) of 12,000 and a melt viscosity at 190°C of 7.8 Pa·s.

### [Production Example 3: production of fluoropolymer (A-3)]

Into a stainless steel autoclave equipped with a stirrer with an inner volume of 2,500 mL, 114.0g of ethylene glycol monoallyl ether, 211.5g of vinyl acetate, 332.0g of vinyl versatate, 76.8g of methyl acrylate, 40.3g of acrylic acid, 647.2g of xylene, 168.8g of ethanol, 11.0g of potassium carbonate, 7.0 g of a 50 mass% xylene solution of tert-butyl peroxypivalate (PBPV) and 520.2g of chlorotrifluoroethylene (CTFE) were introduced. Then, the temperature was gradually raised, and after reaching 55°C, it was held for 20 hours. Then, the temperature was raised to 65°C and held for 5 hours. Then, after cooling, the residue was removed by filtration to obtain a xylene solution of fluoropolymer (A-3).

The obtained xylene solution was subjected to thin film evaporation and dried to a solid content concentration of 99.5 mass%.

The copolymerization composition of the fluoropolymer (A-3) after drying thus obtained, was CTFE units/ethylene glycol monoallyl ether units/vinyl acetate units/vinyl versatate units/methyl acrylate units/acrylate units = 41/10/22/15/7.5/4.5 (mol%). Further, the fluoropolymer (A-3) had a glass transition temperature (Tg) of 35°C, a number average molecular weight (Mn) of 10,000 and a melt viscosity at 190°C of 3.4 Pa·s.

### [Production Example 4: production of fluoropolymer (A-4)]

Into a stainless steel autoclave equipped with a stirrer with an inner volume of 2,500 mL, 512.0g of cyclohexyl vinyl ether (CHVE), 133.0g of hydroxybutyl vinyl ether (HBVE), 558.0g of xylene, 157.0g of ethanol, 11.0g of potassium carbonate, 7.0g of a 50 mass% xylene solution of tert-butyl peroxypivalate (PBPV) and 630.0g of chlorotrifluoroethylene (CTFE) were introduced. Then, the temperature was gradually raised, and after reaching 55°C, it was held for 20 hours. Then, the temperature was raised to 65°C and held for 5 hours. Then, after cooling, the residue was removed by filtration to obtain a xylene solution of fluoropolymer (A-4).

The obtained xylene solution was subjected to thin film evaporation and dried to a solid content concentration of 99.5 mass%.

The copolymerization composition of the fluoropolymer (A-4) after drying thus obtained, was CTFE units/HBVE units/CHVE units = 50/11/39 (mol%). Further, the fluoropolymer (A-4) had a glass transition temperature (Tg) of 54°C, a number average molecular weight (Mn) of 10,000 and a melt viscosity at 190°C of 27.6 Pa·s.

### [Components used in production of composition for powder coating material]

### (Fine particles (B))

The following silica fine particles (B-1) commercially available were obtained and used.

Product name "AEROSIL (registered trademark) R972" (manufactured by Evonik Industries)
BET specific surface area: 110 m²/g
Average primary particle size: 16 nm
Surface treatment: dimethyldichlorosilane (1.0 mass% in 100 mass% of silica fine particles)

### (Resin (C))

The following polyester resin (C-1) commercially available, was obtained and used.

Product name "CRYLCOAT (registered trademark) 4890-0" (manufactured by Daicel-Allnex Ltd., constituting units (molar ratio): neopentyl glycol units/isophthalic acid units = 1/1)
Mass average molecular weight (Mw): 4,400
Number average molecular weight (Mn): 2,500
Hydroxy value: 30 mgKOH/g
Melt viscosity at 190°C: 5.2 Pa·s

### (Curing agent)

Curing agent (D-1): a blocked isocyanate-type curing agent ("Vestagon (registered trademark) B1530" manufactured by Evonik Industries)

### (Curing catalyst)

Curing catalyst (E-1): Xylene solution of dibutyltin dilaurate (10,000-fold diluted product)

### (Additives)

Titanium oxide pigment: Ti-Pure R960 (trade name, manufactured by DuPont, titanium oxide content:. 89 mass%, average primary particle size: greater than 100 nm, thus, does not correspond to the fine particles (B))
Degassing agent: benzoin
Surface modifier A: trade name: BYK-360P, manufactured by BYK-Chemie GmbH
Surface modifier B: trade name: CERAFLOUR 960 (Micronized modified amide wax, melting point: 145°C) manufactured by BYK-Chemie GmbH

### [Ex. 1 to 8]

All components shown in Table 1 were mixed for about 10 to 30 minutes by using a high speed mixer (manufactured by Yusaki Co., Ltd.), to obtain a powdery mixture (composition for powder coating material). The composition for powder coating material was melt-kneaded by using a twin-screw extruder (manufactured by Thermo prism Co., 16 mm extruder) at a barrel setting temperature of 120°C, to obtain pellets. The pellets were pulverized at room temperature by using a pulverizer (manufactured by FRITSCH Co., product name: Rotor Speed Mill P14) and classified by 150 mesh, to obtain a powder composed of a composition for powder coating material having an average particle size of about 40 µm. The amount of each component in Table 1 is the net weight, and with respect to the amount of fine particles (B), the parts by mass to100 parts by mass of the fluoropolymer (A) are also shown in Table 1.

The average particle size of the powder consisting of the composition for powder coating material, is a value obtained by a 50% average volume particle size distribution by measurement by means of a laser diffraction particle size distribution analyzer (manufactured by Sympatec Inc., product name: Helos-Rodos).

By using the obtained powder consisting of the composition for powder coating material as a powder coating material, a cured film (coating film) was obtained as described below, and various evaluations were conducted. The results are shown in Table 1.

### [Methods for evaluation of coating film]

### (Preparation of test specimen)

Using the above powder coating material, on one surface of a chromate-treated aluminum plate (substrate), electrostatic coating was applied by means of an electrostatic coating machine (manufactured by Onoda Cement Co. Ltd., trade name: GX3600C), followed by being held in an atmosphere of 200°C for 20 minutes and then by being left to cool to room temperature to obtain an aluminum plate coated with a cured film having a thickness of from 55 to 65 µm. Using the obtained cured film-coated aluminum plate as a test specimen, the following tests were carried out. The results are shown in Table 1.

### (Appearance of coating film)

The condition of the coating film surface was visually observed and judged by the following standards.
○ (good): Seeding, cissing, wettability failure or the like was not observed on the coating film.
× (bad): Seeding, cissing, wettability failure or the like was observed on the coating film.

### (Surface smoothness of coating film)

Judged by PCI (Powder Coating Institute) using standard plates for visual judgment of smoothness of coating film. As the standard plates, there are ten types 1 to 10, whereby the larger the number, the better the smoothness.

### (60° gloss)

By using a specular gloss meter (manufactured by Nippon Denshoku Industries Co., Ltd., PG-1M), the gloss of a coating film surface was measured at an incidence and reflection angle of 60 degrees.

**Table 1**

| Ex. | | | 1 | 2 | 3 | 4 | 5 | 6 | 7 | 8 |
|---|---|---|---|---|---|---|---|---|---|---|
| Blend (parts by mass) | Fluoropolymer (A) | Fluoropolymer (A-1) | 43.3 | - | - | - | 43.3 | 43.3 | - | - |
| | | Fluoropolymer (A-2) | - | 52.0 | - | 16.7 | - | - | 52.0 | - |
| | | Fluoropolymer (A-3) | - | - | 43.3 | - | - | - | - | - |
| | | Fluoropolymer (A-4) | - | - | - | - | - | - | - | 52.0 |
| | Fine particles (B) | Silica fine particles (B-1) | 0.5 | 0.5 | 0.5 | 0.5 | - | 0.5 | - | 0.5 |
| | Resin (C) | Polyester resin (C-1) | - | - | - | 38.9 | - | - | - | - |
| | Curing agent | Curing agent (D-1) | 21.7 | 13.0 | 21.7 | 9.5 | 21.7 | 21.7 | 13.0 | 13.0 |
| | Curing catalyst | Curing catalyst (E-1) | 0.0063 | 0.0063 | 0.0063 | 0.0063 | 0.0063 | 0.0063 | 0.0063 | 0.0063 |
| | Other components | Titanium oxide pigment | 35.0 | 35.0 | 35.0 | 35.0 | 35.0 | 35.0 | 35.0 | 35.0 |
| | | Degassing agent | 0.4 | 0.4 | 0.4 | 0.4 | 0.4 | 0.4 | 0.4 | 0.4 |
| | | Surface control agent A | 1.0 | 1.0 | 1.0 | 1.0 | 1.0 | 1.0 | 1.0 | 1.0 |
| | | Surface control agent B | 2.0 | 2.0 | 2.0 | 2.0 | 2.0 | 2.0 | 2.0 | 2.0 |
| Amount of fine particles (B) to 100 parts by mass of fluoropolymer (A) | | | 1.2 | 1.0 | 1.2 | 3.0 | - | 11.5 | - | 1.0 |
| Evaluation results | Appearance of coating film | | ○ | ○ | ○ | ○ | ○ | × | ○ | ○ |
| | Surface smoothness of coating film (PCI) | | 9 | 9 | 9 | 9 | 6 | 4 | 6 | 4 |
| | 60° gloss (°) | | 77.9 | 79.8 | 79.2 | 82.9 | 80.9 | 38.8 | 82.0 | 76.9 |

As shown by the results in Table 1, by a powder (powder coating material) composed of a composition for powder coating material wherein fine particles (B) made of silica were added in an amount within a range of from 0.01 to 10 parts by mass to 100 parts by mass of a fluoropolymer (A), it was possible to form a coating film which was excellent in appearance without seeding, cissing, wettability failure or the like, and which was excellent also in surface smoothness at a level of "9" by PCI.

On the other hand, a coating film formed by a powder composed of a composition for powder coating material containing no fine particles (B) or a composition for powder coating material containing a fluoropolymer (A), of which the melt viscosity at 190°C is not within the preferred range, was poor in surface smoothness, although it was excellent in appearance. Further, a coating film formed by a powder composed of a composition for powder coating material containing fine particles (B) excessively, was poor also in appearance.

### INDUSTRIAL APPLICABILITY

The powder coating material of the present invention is useful particularly for coating of an exterior member (an aluminum composite panel, an aluminum panel curtain wall, an aluminum frame for curtain wall, an aluminum window frame).

## Claims

1. A composition for powder coating material **characterized by** comprising a fluoropolymer having units derived from a fluoroolefin, of which the melt viscosity at 190°C measured by a rotary rheometer at a temperature-raising rate of 10°C/min is within a range of from 0.1 to 25 Pa·s, and fine particles which are composed of at least one member selected from silica, alumina, titania and zinc oxide, and of which the specific surface area is from 10 to 500 m²/g and the average primary particle size is within a range of from 0.1 to 100 nm, wherein said fine particles are contained in an amount of from 0.01 to 10 parts by mass, to 100 parts by mass of said fluoropolymer, wherein the fluoropolymer is
(A1) a hydroxy group-containing fluoropolymer, wherein the proportion of the units derived from a monomer having a hydroxy group is from 0.5 to 25 mol% in all units (100 mol%) in the hydroxy group-containing fluoropolymer, or
(A2) a carboxy group-containing fluoropolymer, wherein the proportion of the monomer units having a carboxy group is from 0.5 to 20 mol% in all units (100 mol%) in the carboxy group-containing fluoropolymer.

2. The composition for powder coating material according to Claim 1, wherein the fine particles are surface-treated with an organosilicon compound.

3. The composition for powder coating material according to Claim 1 or 2, wherein the average primary particle size of the fine particles is within a range of from 0.5 to 90 nm.

4. The composition for powder coating material according to any one of Claims 1 to 3, which further contains a resin other than the fluoropolymer.

5. The composition for powder coating material according to Claim 4, wherein the resin other than the fluoropolymer is a resin which is composed of at least one member selected from an acrylic resin, a polyester resin, a polyurethane resin, an epoxy resin and a silicone resin, and of which the melt viscosity at 190°C measured by a rotary rheometer at a temperature-raising rate of 10°C/min is within a range of from 0.1 to 10 Pa·s.

6. The composition for powder coating material according to Claim 4 or 5, wherein the resin other than the fluoropolymer is a polyester resin having hydroxy groups or carboxy groups.

7. The composition for powder coating material according to any one of Claims 1 to 6, which further contains a curing agent, a curing catalyst, an ultraviolet absorber or a pigment.

8. The composition for powder coating material according to any one of claims 1 to 3, wherein the composition further comprises a pigment, and the content of the pigment is from 20 to 200 parts by mass per 100 parts by mass of the fluoropolymer.

9. The composition for powder coating material according to any one of claims 4 to 6, wherein the composition further comprises a pigment, and the content of the pigment is from 20 to 200 parts by mass per 100 parts by mass of the total of the fluoropolymer and the resin other than the fluoropolymer.

10. A powder coating material comprising a powder composed of the composition for powder coating material as defined in any one of Claims 1 to 9.

11. A coated article having a coating film formed of the powder coating material as defined in Claim 10, on the surface of a substrate.

12. The coated article according to Claim 11, wherein the 60° gloss of the coating film is from 10 to 90°.

13. The coated article according to Claim 11 or 12, wherein the material of the substrate is aluminum.

## Patentansprüche

1. Zusammensetzung für Pulverbeschichtungsmaterial, **gekennzeichnet durch** das Umfassen von einem Fluorpolymer mit Einheiten, abgeleitet von einem Fluorolefin, wovon die Schmelzviskosität bei 190°C, gemessen durch ein Rotationsrheometer bei einer Temperaturanstiegsrate von 10°C/min, innerhalb eines Bereichs von 0,1 bis 25 Pa·s ist, und von feinen Teilchen, welche mindestens ein Mitglied, ausgewählt aus Silica, Aluminiumoxid, Titanoxid und Zinkoxid, umfassen, und wovon der spezifische Oberflächenbereich von 10 bis 500 m²/g ist und die durchschnittliche primäre Teilchengröße innerhalb eines Bereichs von 0,1 bis 100 nm ist, wobei die feinen Teilchen in einer Menge von 0,01 bis 10 Masseteilen pro 100 Masseteilen des Fluorpolymers enthalten sind, wobei das Fluorpolymer
(A1) ein Hydroxygruppen-enthaltendes Fluorpolymer, wobei der Anteil der Einheiten, abgeleitet von einem Monomer mit einer Hydroxygruppe, von 0,5 bis 25 Mol-% in sämtlichen Einheiten (100 Mol-%) in dem Hydroxygruppenenthaltenden Fluorpolymer ist, oder
(A2) ein Carboxygruppen-enthaltendes Fluorpolymer ist, wobei der Anteil der Monomereinheiten mit einer Carboxygruppe von 0,5 bis 20 Mol-% in sämtlichen Einheiten (100 Mol-%) in dem Carboxygruppen-enthaltenen Fluoropolymer ist.

2. Zusammensetzung für Pulverbeschichtungsmaterial gemäß Anspruch 1, wobei die feinen Teilchen mit einer Organosiliciumverbindung oberflächenbehandelt worden sind.

3. Zusammensetzung für Pulverbeschichtungsmaterial gemäß Anspruch 1 oder 2, wobei die durchschnittliche primäre Teilchengröße der feinen Teilchen innerhalb eines Bereichs von 0,5 bis 90 nm ist.

4. Zusammensetzung für Pulverbeschichtungsmaterial gemäß einem der Ansprüche 1 bis 3, welche weiter ein Harz, verschieden von dem Fluorpolymer, enthält.

5. Zusammensetzung für Pulverbeschichtungsmaterial gemäß Anspruch 4, wobei das Harz, verschieden von dem Fluoropolymer, ein Harz ist, welches mindestens ein Mitglied umfaßt, ausgewählt aus einem Acrylharz, einem Polyesterharz, einem Polyurethanharz, einem Epoxyharz und einem Silikonharz, und wovon die Schmelzviskosität bei 190°C, gemessen durch ein Rotationsrheometer bei einer Temperaturanstiegsrate von 10°C/min, innerhalb eines Bereichs von 0,1 bis 10 Pa·s ist.

6. Zusammensetzung für Pulverbeschichtungsmaterial gemäß Anspruch 4 oder 5, wobei das Harz, verschieden von dem Fluorpolymer, ein Polyesterharz mit Hydroxygruppen oder Carboxygruppen ist.

7. Zusammensetzung für Pulverbeschichtungsmaterial gemäß einem der Ansprüche 1 bis 6, welches weiter ein Härtungsmittel, einen Härtungskatalysator, einen Ultraviolettabsorber oder ein Pigment enthält.

8. Zusammensetzung für Pulverbeschichtungsmaterial gemäß einem der Ansprüche 1 bis 3, wobei die Zusammensetzung weiter ein Pigment umfaßt und der Anteil des Pigments von 20 bis 200 Masseteilen pro 100 Masseteilen des Fluorpolymers ist.

9. Zusammensetzung für Pulverbeschichtungsmaterial gemäß einem der Ansprüche 4 bis 6, wobei die Zusammensetzung weiter ein Pigment umfaßt, und der Anteil des Pigments von 20 bis 200 Masseteilen pro 100 Masseteilen der Gesamtheit des Fluorpolymers und des Harzes, verschieden von dem Fluorpolymer, ist.

10. Pulverbeschichtungsmaterial, umfassend ein Pulver, aufgebaut aus der Zusammensetzung für Pulverbeschichtungsmaterial, wie in einem der Ansprüche 1 bis 9 definiert.

11. Beschichteter Gegenstand mit einem Beschichtungsfilm, gebildet aus dem Pulverbeschichtungsmaterial, wie in Anspruch 10 definiert, auf der Oberfläche eines Substrats.

12. Beschichteter Gegenstand gemäß Anspruch 11, wobei der 60° Glanz des Beschichtungsfilms von 10 bis 90° ist.

13. Beschichteter Gegenstand gemäß Anspruch 11 oder 12, wobei das Material des Substrats Aluminium ist.

## Revendications

1. Composition pour matériau de revêtement en poudre **caractérisée en ce qu'**elle comprend un fluoropolymère ayant des motifs dérivés d'une fluoro-oléfine, dont la viscosité à l'état fondu à 190 °C mesurée par un rhéomètre rotatif à une vitesse d'augmentation de température de 10 °C/min est dans une plage allant de 0,1 à 25 Pa.s, et des particules fines qui sont composées d'au moins un élément sélectionné parmi une silice, une alumine, un oxyde de titane et un oxyde de zinc, et dont la surface spécifique est de 10 à 500 m²/g et la taille particulaire primaire moyenne est dans une plage allant de 0,1 à 100 nm, dans laquelle lesdites particules fines sont contenues en une quantité allant de 0,01 à 10 parties en masse, pour 100 parties en masse dudit fluoropolymère, dans laquelle le fluoropolymère est
(A1) un fluoropolymère contenant un groupe hydroxy, dans laquelle la proportion des motifs dérivés d'un monomère ayant un groupe hydroxy est de 0,5 à 25 % en mole dans tous les motifs (100 % en mole) dans le fluoropolymère contenant un groupe hydroxy, ou
(A2) un fluoropolymère contenant un groupe carboxy, dans laquelle la proportion des motifs monomères ayant un groupe carboxy est de 0,5 à 20 % en mole dans tous les motifs (100 % en mole) dans le fluoropolymère contenant un groupe carboxy.

2. Composition pour matériau de revêtement en poudre selon la revendication 1, dans laquelle les particules fines sont traitées en surface avec un composé d'organosilicium.

3. Composition pour matériau de revêtement en poudre selon la revendication 1 ou 2, dans laquelle la taille particulaire primaire moyenne des particules fines est dans une plage allant de 0,5 à 90 nm.

4. Composition pour matériau de revêtement en poudre selon l'une quelconque des revendications 1 à 3, qui contient en outre une résine autre que le fluoropolymère.

5. Composition pour matériau de revêtement en poudre selon la revendication 4, dans laquelle la résine autre que le fluoropolymère est une résine qui est composée d'au moins un élément sélectionné parmi une résine acrylique, une résine de polyester, une résine de polyuréthane, une résine époxy et une résine de silicone, et dont la viscosité à l'état fondu à 190 °C mesurée par un rhéomètre rotatif à une vitesse d'augmentation de température de 10 °C/min est dans une plage allant de 0,1 à 10 Pa.s.

6. Composition pour matériau de revêtement en poudre selon la revendication 4 ou 5, dans laquelle la résine autre que le fluoropolymère est une résine de polyester ayant des groupes hydroxy ou des groupes carboxy.

7. Composition pour matériau de revêtement en poudre selon l'une quelconque des revendications 1 à 6, qui contient en outre un agent de durcissement, un catalyseur de durcissement, un absorbeur d'ultraviolet ou un pigment.

8. Composition pour matériau de revêtement en poudre selon l'une quelconque des revendications 1 à 3, dans laquelle la composition comprend en outre un pigment, et la teneur du pigment est de 20 à 200 parties en masse pour 100 parties en masse du fluoropolymère.

9. Composition pour matériau de revêtement en poudre selon l'une quelconque des revendications 4 à 6, dans laquelle la composition comprend en outre un pigment, et la teneur du pigment est de 20 à 200 parties en masse pour 100 parties en masse du total du fluoropolymère et de la résine autre que le fluoropolymère.

10. Matériau de revêtement en poudre comprenant une poudre composée de la composition pour matériau de revêtement en poudre telle que définie dans l'une quelconque des revendications 1 à 9.

11. Article revêtu ayant un film de revêtement formé du matériau de revêtement en poudre tel que défini dans la revendication 10, sur la surface d'un substrat.

12. Article revêtu selon la revendication 11, dans lequel le brillant à 60° du film de revêtement est de 10 à 90°.

13. Article revêtu selon la revendication 11 ou 12, dans lequel le matériau du substrat est l'aluminium.
